Europäisches Patentamt

**European Patent Office**

**Office européen des brevets**

(19)

(11) Numéro de publication: **0 104 117**
**A2**

(12) **DEMANDE DE BREVET EUROPEEN**

(21) Numéro de dépôt: **83401803.8**

(22) Date de dépôt: **15.09.83**

(51) Int. Cl.³: **A 22 B 5/16**

(30) Priorité: **21.09.82 FR 8216006**

(43) Date de publication de la demande:
**28.03.84 Bulletin 84/13**

(84) Etats contractants désignés:
**CH DE FR GB LI**

(71) Demandeur: **SOCIETE SAFO**
**Abattoir de Melou - Z.I.**
**F-81100 Castres(FR)**

(72) Inventeur: **Madern, Jacques**
**Z.I. De Melou**
**F-81100 Castres(FR)**

(74) Mandataire: **Ravina, Bernard**
**24, boulevard Riquet**
**F-31000 Toulouse(FR)**

(54) **Machine pour le dépouillage des animaux de préférence à fourrure tels que les lapins.**

(57) La présente invention concerne une machine pour le dépouillage des animaux de préférence à fourrure comme par exemple les lapins.

La machine selon l'invention est destinée à être intégrée dans une chaîne d'abattage du type de celle comportant un convoyeur aérien (1) amenant les animaux abattus à différents postes de travail, et se caractérise essentiellement en ce qu'elle comporte des moyens de traction (2) de la peau de l'animal, au moins un moyen de détection (3) de la position de la peau par rapport aux moyens de traction, au moins un organe de commande (4) de la mise en fonctionnement de moyens de traction validé par le moyen de détection (3), au moins un moyen de guidage (5) de la peau vers les moyens de traction, au moins un moyen d'analyse (6) de l'effort exercé sur la peau lors du dépouillage et au moins un circuit d'électronique (7) de commande de l'arrêt des moyens de traction et du dégagement de la peau à partir des informations transmises par le moyen d'analyse en sorte d'interrompre l'opération de dépouillage lorsque l'importance de l'effort de traction peut conduire à la cassure de la peau.

FIG.1

EP 0 104 117 A2

MACHINE POUR LE DEPOUILLAGE DES ANIMAUX DE PREFERENCE  A  FOURRURE
TELS QUE LES LAPINS.

La présente invention a pour objet une machine pour le dépouillage des animaux de préférence à fourrure comme par exemple les lapins destinée à  etre intégrée dans une cha ine d'abattage du type de celles comportant un convoyeur aérien amenant les animaux  abattus à différents postes de travail.

On sait que la  peau  des  lapins  si  l'animal  est  correctement dépouillé  peut  etre utilisée dans le domaine de la peausserie et donc constituer une source importante de revenus  pour  les  abattoirs.

C'est ainsi que le prix de vente d une peau exempte de défaut peut atteindre et m eme dépasser celui de vente de la chair  de  l'animal.

En sorte de ne pas abimer  la  peau  de  l'animal, l opération  de dépouillage  est effectuée manuellement, tout d'abord, la personne employée au poste de dépouillage sectionne la peau  au  niveau  de l'arrière  train  et  des  pattes arrières de l'animal et poursuit l'opération de dépouillage en exerçant une traction sur la peau vers la t ête de l'animal, la peau étant  bien  entendu  retournée sur le corps du dit animal.

Le dépouillage se poursuit jusqu'à la partie arrière de la t ête.

A ce niveau, pour éviter de rompre la peau par traction,  la  personne employée doit sectionner les ligaments de retenu de la dite peau à la t ete et poursuit ensuite le dépouillage.

2                                              0104117

Le dépouillage du lapin depuis l'arrière train jusqu'à la base du cou est une opération peu pénible qui peut s'effectuer manuellement.

Par contre le dépouillage du cou de l'animal, de la partie arrière de la t^ete et des pattes avant exige un effort physique important de la part de la personne employée.

Devant cet état de fait, les abattoirs emploient au moins trois personnes pour le dépouillage, qui respectivement dépouillent l'animal depuis son arrière train jusqu à la base du cou, depuis le cou jusqu'à la t^ete et terminent l opération de dépouillage. Comme on le comprend l'emploi de trois personnes pour l'opération de dépouillage grève le co^ut d exploitation de l'abattoir.

La présente invention a pour objet de pallier aux inconvénients précédemment énoncés en mettant en oeuvre une machine apte à dépouiller les animaux abattus et notamment le cou et la partie arrière de la t^ete de ceux-ci sans abimer la peau.

A cet effet, la machine selon la présente invention pour le dépouillage des animaux à fourrure par exemple des lapins et notamment du cou et de la partie arrière de la t^ete de ceux-ci destinée à ^etre intégrée dans une cha ine d abattage du type de celles comportant un convoyeur aérien amenant les animaux abattus à différents postes de travail se caractérise essentiellement en ce qu'elle comprend des moyens de traction de la peau de l'animal, au moins un moyen de détection de la position de la peau par rapport aux moyens de traction, au moins un organe de commande de la mise en fonctionnement des moyens de traction validé par le moyen de détection, au moins un moyen de guidage de la peau vers les moyens

**0104117**

de traction, au moins un moyen d'analyse de l'effort de traction exercé sur la peau lors du dépouillage et au moins un circuit d'électroniques de commande de l'arr et des moyens de traction et du dégagement de la peau à partir des informations transmises par le moyen d'analyse en sorte d'interrompre l'opération de dépouillage lorsque l'importance de l'effort de traction peut conduire à la cassure de la peau. On comprend aisément qu'une telle machine est entièrement autonome et ne requiert aucune surveillance de l'opération de dépouillage.

Suivant une autre caractéristique de l'invention, les moyens de traction, montés sur un b ati comportant deux flancs verticaux sont constitués par deux parois larges, rugueuses, entre lesquelles est introduite la peau, par des organes presseurs maintenant ces parois contre la peau au moins pendant l'opération de dépouillage, par au moins un organe moteur pour rapprocher ou écarter les parois l'une de l'autre donc pour happer la peau ou la dégager, et/ou par au moins un mécanisme pour déplacer simultanément les les deux parois suivant un mouvement de descente pour le dépouillage de l'animal ou suivant un mouvement de montée pour interrompre la traction et/ou dégager la peau.

D'autres avantages et caractéristiques de l'invention paraîtront à la lecture de la description d une forme particulière de réalisationdonnée à titre indicatif en se référant aux dessins annexés en lesquels :

- la figure 1 est une vue en perspective d une machine selon l'invention intégré dans une chaîne d'abattage,

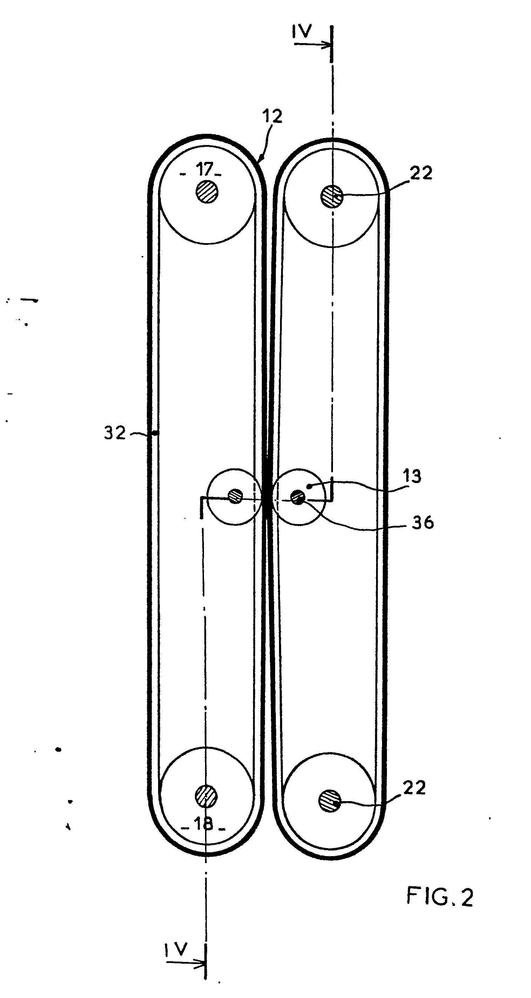

- la figure 2 est une vue en coupe transversale des moyens de

traction de la machine,

- la figure 3 est une vue de détail d'une paroi rugueuse,

- la figure 4 est une vue en coupe longitudinale de la machine selon la ligne IV/IV de la fig.2,

- la figure 4A est une vue de face de la machine,

- les figures 5 et 6 sont des vues de détail de la machine,

- Les figures 7 et 8 sont des vues d'autres formes de réalisation des moyens de traction de la machine selon l'invention.

- la figure 9 est une vue du schéma électronique de la machine

Telle que représentée la machine selon l'invention pour le dépouillage des animaux de préférence à fourrure comme par exemple les lapins destinée à être intégrée dans une chaîne d'abattage du type de celles comportant un convoyeur aérien 1 amenant les animaux abattus à différents postes de travail, comporte des moyens de traction 2 de la peau de l'animal, au moins un moyen de détection 3 de la position de la peau par rapport au moyen de traction, au moins un organe de commande 4 de la mise en fonctionnement des moyens de traction validé par le moyen de détection 3, au moins un moyen de guidage 5 de la peau vers les moyens de traction, au moins un moyen d'analyse 6 de l effort de traction exercé sur la peau lors du dépouillage, et au moins un circuit d électroniques 7 de commande de l arr et des moyens de traction et du dégagement de la peau à partir des informations transmises par le moyen d analyse en sorte d interrompre l opération de dépouillage lorsque l'importance de l'effort de traction peut conduire à la cassure de la peau.

Comme connu le convoyeur aérien est constitué par un rail de guidage 8, suspendu au-dessus du sol par des potences, sur lequel sont montés des équipages mobiles 9,mus suivant un mouvement continu de translation le long du rail, par un cable d entra^inement 10 coopérant avec un organe moteur non représenté, A chaque équipage mobile est suspendu un animal abattu A ceteffet chaque équipage 9 est doté de deux crochets 11,ou autre système de suspension, à chacun desquels est accroché la patte arrière d'un lapin.

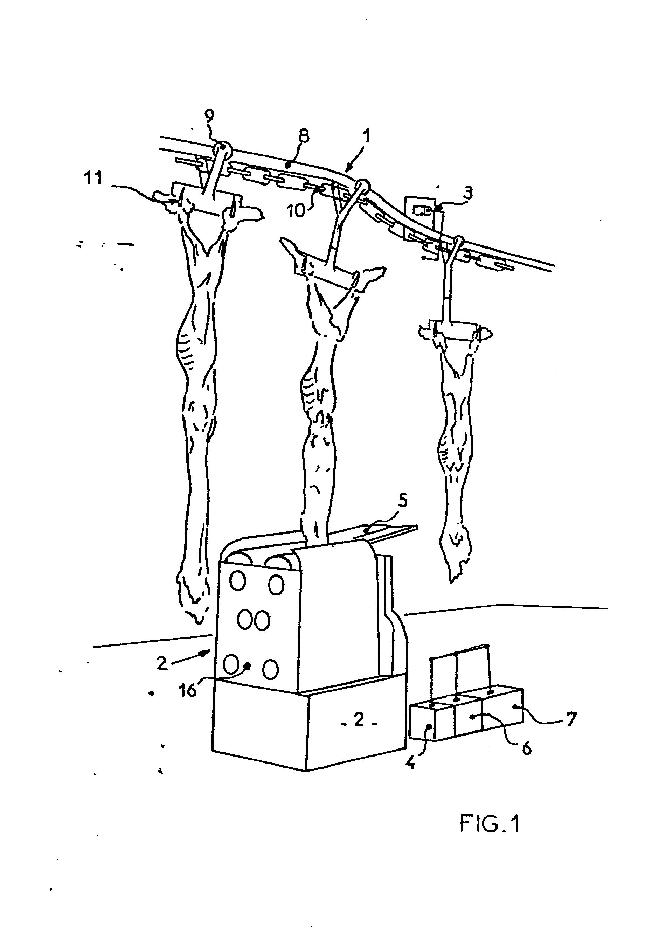

Comme on peut le voir en fig 1 les animaux abattus avant d etre dépouillés par la machine selon l'invention on subit un dépouillage depuis l'arrière train jusqu à la base de leur cou On peut voir en outre que la peau après ce dépouillage est accrochée la t ête et au cou de l'animal et pend sous celui-ci.

De préférence le moyens de traction 2 de la machine sont surélevés par rapport au sol en sorte de pouvoir happer la peau de l animal lors du passage de celle-ci.

Les moyens de traction de la machine, montés sur un b ati comportant deux flancs verticaux 16, sont constitués par deux parois 12 larges, rugueuses entre lesquelles est introduite la peau, par des organes presseurs 13 maintenant ces parois contre la peau au moins pendant le dépouillage, par au moins un organe moteur 14 pour rapprocher ou écarter les parois l'une de l'autre et/ou par au moins un mécanisme pour déplacer simultanément les deux parois suivant un mouvement de descente pour le dépouillage du cou et de l'arrière de la t ete de l'animal et suivant un mouvement de montée pour interrompre la traction et/ou dégager la peau.

Les deux flancs verticaux 16 sont montés sur une ossature porteuse et sont maintenus à écartement par des entretoises .

Entre ces flancs verticaux sont montés lés parois rugueuses 12 Les parois 12 sont constituées en un matériau souple d un coéffi-cient d adhérence élevé et présentent chacune sur leur face active,c est-àdire leur face en contact avec la peau, des saillies 12A en forme de pavés disposées suivant plusieurs rangs décalés les uns par rapport aux autres.

De préférence les parois rugueuses se présentent sous la forme de deux bandes sans fin ou parois sans fin et sont montées chacune sur deux rouleaux cylindriques, horizontaux 17 et 18 et transversaux aux flancs.

Pour caler latéralement les bandes sur les rouleaux supérieurs et inférieurs et pour éviter que celles-ci glissent par rapport au rouleaux, les dites bandes sont dotées chacune sur leur face intérieure d au moins une courroie trapézo"idale 32 engagée dans une gorge trapézoidale 33 ménagée dans chaque rouleau 17 et 18 Avantageusement chaque bande est équipée de deux courroies trapé-zo"idales parallèles l'une à l'autre et fixée chacune à proximité d un des bords de la bande par tous procédés et moyens connus de l'homme de l'art Chacun des rouleaux cylindriques est monté rotatif dans deux paliers 19 d extrémité extérieurs au b ati rapportés sur les flancs.

De préférence les paliers des rouleaux supérieurs 17 sont montés sur un support 20 angulairement mobile en sorte que les dits rou-leaux supérieurs puissent se rapprocher l'un de l'autre ou s écar-ter lors de l'introduction de la peau entre les parois rugueuses.

Bien évidemment, les flancs 16 sont dotés d orifices transversaux 21 de passage des axes 22 des rouleaux et de diamètre relativement important pour assurer le débattement des dits axes 22.

Le support 20 de chaque palier supérieur est de préférence constitué par une patte soudée au dit palier et articulée par son extrémité libre au flanc correspondant.

L axe d articulation de chaque patte est déporté latéralement par rapport au palier de manière que la mise en tension des bandes conduise au rapprochement des rouleaux supérieurs 17 l un vers l'autre.

Les paliers 19 des rouleaux inférieurs sont également montés mobiles et sont susceptibles d etre déplacés de haut en bas pour tendre les bandes.

A cet effet les paliers 19 des rouleaux inférieurs 18 sont dotés d organes 23 de coulissement sur les flancs 16 du b ati et coopèrent avec des organes de mise en tension.

Selon l exemple préférentiel de réalisation, les organes de coulissement sont engagés dans au moins une lumière transversale 24, ménagée dans les flancs 16 du b ati, constituant moyen de guidage

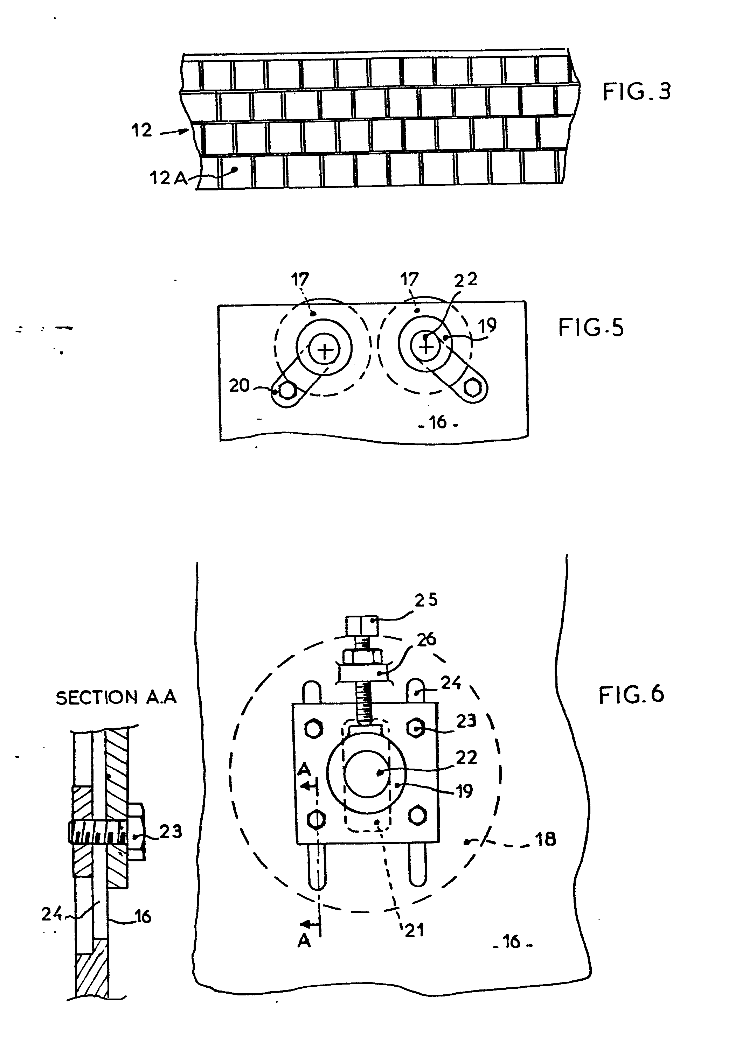

Comme on peut le voir en fig 6, chaque palier inférieur 19 selon une forme préférée de réalisation comporte quatre organes de coulissement 23, montés deux à deux dans une m eme lumière 24, constitués chacun par un boulon avec écrou pour maintenir également le dit palier contre le flanc correspondant.

Il est bien évident que les orifices 21 de passage des axes 22 des rouleaux inférieurs 18 sont dimensionnés de manière à permettre des débattements des dits axes lors dé la mise en tension de la bande.

Chaque organe de mise en tension des bandes selon un exemple préférentiel de réalisation est constitué par une tige filetée 25 verticale en appui sur la zone supérieure du palier engagée dans un orifice fileté ménagé dans un bossage 26 fixé au flanc correspondant au dessus du dit palier 10.

La tige filetée est muni d un contre écrou pour etre bloquée en rotation.

Il est bien évident que tout autre système de mise en tension pourra etre employé.

Comme dit précédemment la machine est équipée d organes presseurs 13 en contact avec les parois pour les maintenir contre la peau Selon l exemple de réalisation la machine est équipée d au moins deux organes presseurs 13 montés en vis à vis l'un de l'autre chacun dans l espace défini par une bande ou paroi sans fin et coopèrant chacun avec au moins un organe, réglable, de maintien contre la portion de la bande en prisé avec la peau.

Chaque organe 13 est constitué par un rouleau cylindrique horizontal en contact avec les portions de la bande en prise avec la peau, monté rotatif dans des paliers 34 d extrémité rapportés sur les flancs 16 du bati de la machine Chaque rouleau presseur est rev etu d un matériau souple et élastique par exemple du caoutchouc en sorte de se déformer lors de l introduction de la peau entre les bandes afin d éviter tout écrasement de la dite peau

9

De préférence le rev etement de chaque rouleau presseur est constitué par la juxtaposition de rondelles 35 en matériau souple et élastique enfilée sur l'axe 36 du dit rouleau entre deux flasques 37 d extrémité.

De préférence, chaque organe, réglable, de maintien du rouleau 13 contre la portion de la bande en prise avec la peau coopère avec un des paliers du dit rouleau, le dit palier comportant des organes de coulissement comme précédemment décrit Ces deux organes de coulissement sont montés également deux à deux dans des lumières 24 horizontales ménagées dans les dits flancs 16
Egalement, l'orifice 21 transversal ménagé dans chaque flanc pour le passage de l'extrémité de l'axe 36 de l'organe presseur, est dimensionné de manière à permettre le débattement du dit organe Cette disposition a pour but d écarter ou de rapprocher plus ou moins les rouleaux l un de l'autre en sorte de régler la pression des bandes ou parois sans fin sur la peau.

Avant l'introduction de la peau entre ces parois la position de celle-ci est détectée par le moyen 3 qui agit sur le mécanisme des moyens de traction par l intermédiaire de l'organe de commande 4 en sorte d actionner en rotation les rouleaux 17 et 18 dans un sens tel que les portions des bandes ou parois sans fin en vis à vis l une de l'autre soient animées d un mouvement de descente.

Cet organe de détection est constitué par exemple par un contac-antenne qui détecte le passage d un équipage mobile à proximité des moyens de traction Ce moyen de détection est fixé par tous moyens connus au rail de guidage 8 du convoyeur aérien 1.

L'organe 4 est constitué par tout dispositif électrique ou électronique connu en soi qui dés qu'il reçoit une impulsion du moyen de détection alimente en énergie le mécanisme des moyens de traction.

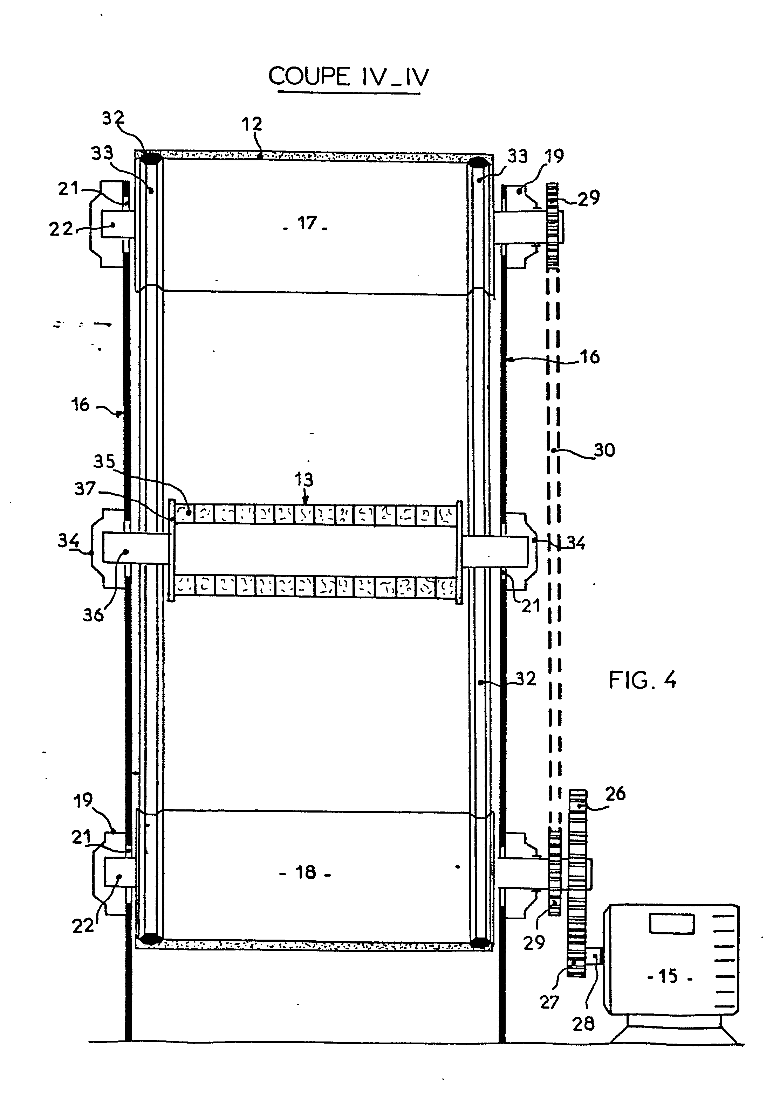

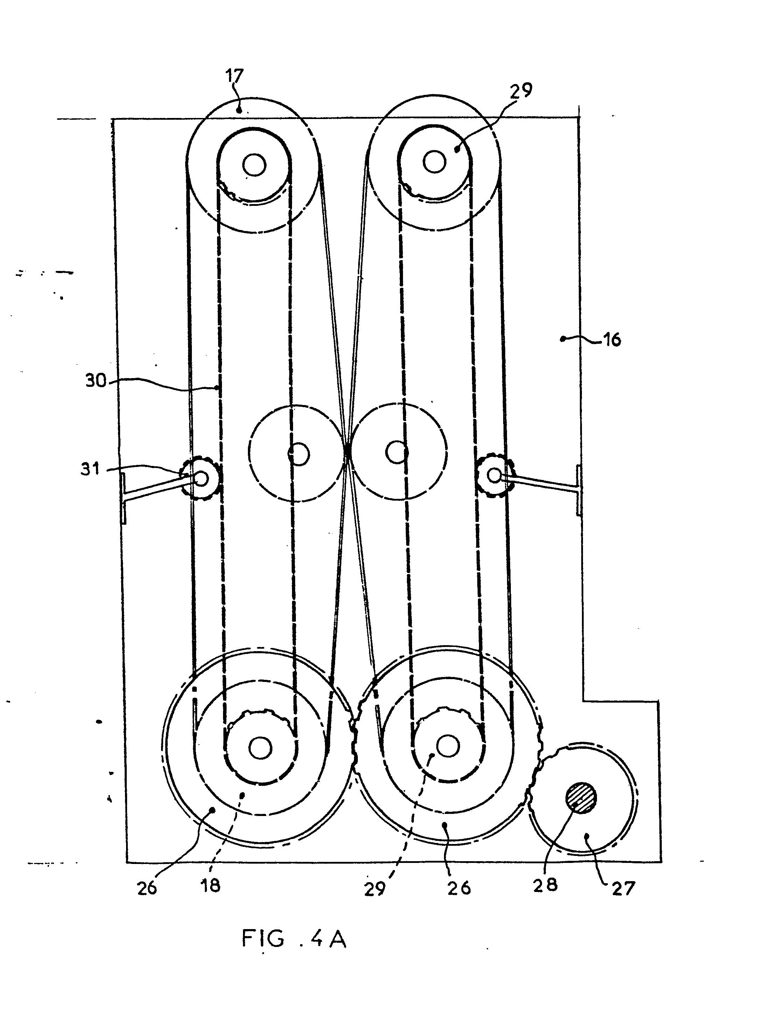

Ce mécanisme selon la forme de réalisation illustrée en fig.4 et 4A est constitué par un organe moteur 15 associé à une transmission à roue dentée et/ou à pignon et cha ine coopérant avec les axes du rouleau inférieur et/ou supérieur 17 et 18.

De préférence, la transmission est constituée par deux pignons 26 en prise l'un avec l'autre calés respectivement à une des extrémités d'un axe d un rouleau inférieur.

Un de ces pignons est en prise avec un troisième pignon denté 27 calé sur l arbre de sortie 28 de l'organe moteur 15 ou sur l'arbre de sortie d un organe de transformation de la vitesse angulaire de l arbre de sortie de l organe moteur par exemple un moto réducteur.

On pourra prévoir également une transmission par pignon et cha ine entre les deux rouleaux d une m~eme bande comme représenté en figures 4 ét 4A.

Sur ces figures, on peut voir que les axes des rouleaux d une m e-me bande sont dotés chacun en extrémité d un pignon denté 29 sur lequel s enroule une cha ine sans fin 30 du type "galle" mise en tension un tendeur 31 connu en soit.

Comme on le comprend le sens de rotation de chaque bande est inverse de celui de l autre en sorte que les portions de celles-ci

en contact avec la peau soient animées simultanément d un mouvement de descente ou de montée.

Le mouvement de descente des parois en contact avec la peau entraine la dite peau vers le bas et conduit au dépouillage du cou
et de l'arrière de la t ete de l'animal et le mouvement de montée
des portions des parois en contact avec la peau conduit à l arr et
de la traction et au dégagement de la peau.

Selon cette forme de réalisation, la machine n'est pas équipée de
l'organe moteur 14 dont le r ole est d'écarter les parois pour
assurer le dégagement de la peau.

Comme dit précédémment, les moyens de traction de la machine sont
surélevés par rapport au sol en sorte que la peau du lapin puisse
etre trainée sur les dits moyens lors de l'avancement de l'équipage mobile et etre happée par ces moyens.

La peau est dirigée vers les parois ruqueuses par le moyen de guidage 5 Ce moyen de guidage est par exemple constitué par une goulotte horizontale fixée au b ati en avant des moyens de traction
par tous procédés et moyens connus de l'homme de l'art.

De préférence, la goulotte est constituée par pliage d'une feuille
métallique et présente une section transversale sensiblement en V
ou en arc-de-cercle,
L'extrémité de la goulotte par laquelle s introduit la peau est
avantageusement évasée.

Après le dépouillage du cou et de l'arrière de la t ete de l'ani

mal, l'arr^et du mouvement de descente des parois rugueuses et le dégagement de la peau est commandé par les moyens d'analyse 6 de l'effort de traction.

Selon la forme préférentielle de réalisation, l'analyse de l'effort de traction consiste en l analyse de la puissance fournie au moteur.

Lorsque le dépouillage arrive à son terme et que la traction sur la peau cro^it, le couple moteur de l'organe 15 cro it également ainsi que l'intensité du courant électrique qui est délivré à cet organe.

Le moyen d'analyse 6 est constitué par un circuit électronique qui compare à chaque instant la valeur de l'intensité reçue par le moteur à une valeur de référence prédéterminée_ou est constitué par un circuit électronique apte à détecter une variation brusque d intensité reçue par le dit organe moteur.

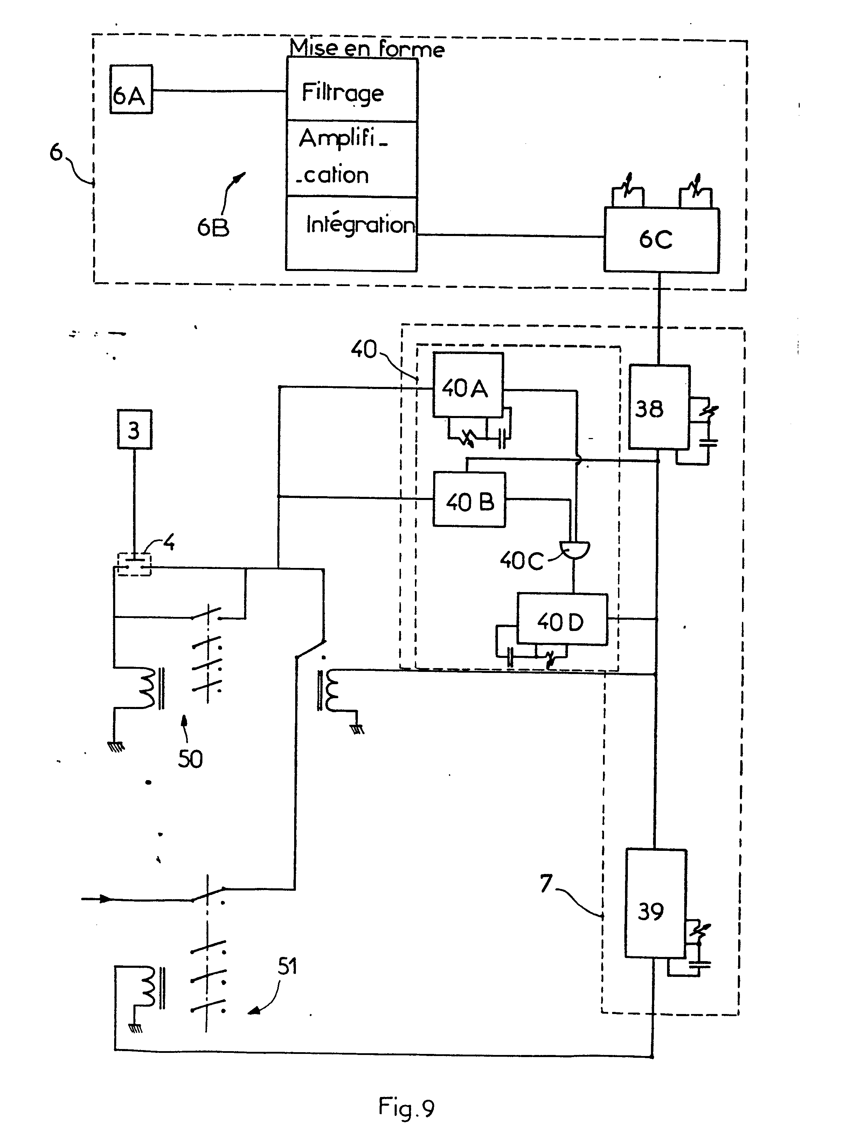

Le moyen d analyse 6 représenté schématiquement en figure 9 est constitué selon une forme préférentielle de réalisation, d'un capteur de signal 6A, de moyens de mise en forme 6B du signal par filtrage, amplification et intégration afin que le dit signal soit utilisable pour transmettre une information à un comparateur 6C par exemple du type à fen^etre qui établit à chaque instant une comparaison du signal reçu transformé à des valeurs de consigne.

Après détection d'une valeur d intensité égale aux valeurs de référence ou détection d'une variation brusque d'intensité, le moyen d analyse 6 délivre une impulsion au circuit d'électronique 7 qui commande l'arr^et de la machine pendant une durée déterminée puis l inversion du sens de la rotation du moteur.

Le circuit électronique est, suivant une forme préférentielle de réalisation, représentée en figure 9 constitué de deux circuits monostables 38 et 39 et d'un circuit de sécurité 40.

Le premier circuit monostable 38 est apte à détecter une impulsion provenant du circuit d'analyse 6 qui commande l'arr et de la rotation du moteur durant un temps prédéterminé réglable sur le dit circuit monostable 38.

Lorsque le temps de l'arr'et est écoulé, le deuxième circuit monostable 39 reçoit une impulsion qui permet la mise en route du moteur dans lesens de rotation inverse durant un temps prédéterminé réglable.

Lorsque la durée de rotation inverse est écoulée, le moteur s'arr'ete et est remis en fonctionnement dans le sens de la traction par une impulsion fournie par le moyen de détection 3 sur l'organe de commande 4.

Le circuit de sécurité 40 permet l arr et du moteur et l'inversion de la rotation du moteur en cas de panne émettant un signal sonore et/ou lumineux avertissant les personnes proches de la machine Le dit circuit 40 peut comporter, d une part, un circuit monostable 40A déterminant un délai de temps tolérable pendant lequel doit se produire l arr et de la machine commandé par le circuit monostable 38 et d autre part, une bascule bistable 40B dont la sortie est remise à zéro lorsqu elle reçoit l'impulsion de sortie du circuit monostable 38.

Si cette impulsion est reçue durant le temps maximal tolérable déterminé par le circuit monostable 40A, le fonctionnement de la machine est normal Par contre, si cette impulsion est reçue en dehors de ce temps. la combinaison des signaux de sortie du cir circuit monostable 40A et de la bascule bistable 40B par un élément 40C provoqué, en passant par un circuit monostable 40D du m eme type que le circuit monostable 38, l'arr°et puis l inversion de la rotation du moteur et déclenche une alarme.

Les circuits monostables 38 et 39 agissent directement par exemple sur deux relais dont un est un relais à auto-alimentation 50 pour la commande de la rotation du moteur dans le sens de la traction de la peau comportant d autre part l'organe de commande 4 et dont l'autre est un relais 51 de type connu pour la commande de l'inversion de la rotation du moteur.

Mais il va de soi que les éléments du circuit électronique 7, les éléments de commande de mise en fonctionnement du moteur dans les deux sens de rotation, et les éléments du moyen d'analyse 6 peuvent etre d un autre type que ceux décrits ci-dessus.

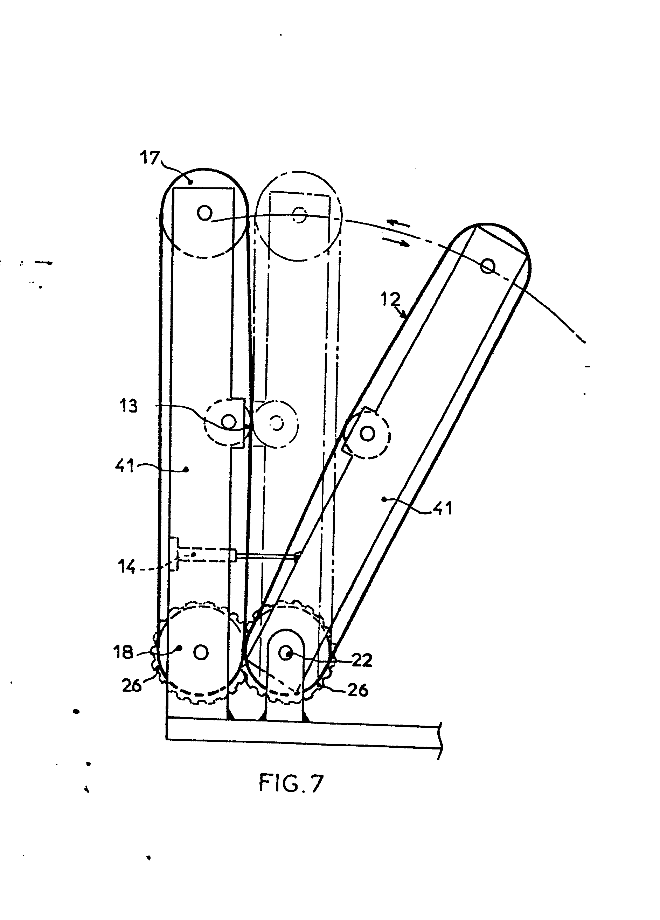

En fig.7, on a représenté un autre exemple de réalisation de la machine selon l'invention.
Comme on peut le voir, le b ati de la machine comporte deux supsupports 41 articulés l'un à l'autre, portant chacun une bande ou paroi sans fin 12 les rouleaux 17 et 18 et l'organe presseur 13 associés avec la dite bande, et reliés entre eux par l organe moteur 14 commandant le rapprochement ou l'écartement de ceux-ci.
Avantageusement, un des supports est articulé à l autre autour de l axe 22 de son rouleau inférieur en sorte que les pignons 26 soient toujours en prise l'un avec l'autre.
L organe moteur 14 constitué de préférence par un verin hydraulique est articulé par sa tige à un des supports et par son corps à l'autre support.

Selon cette variante de réalisation, le moyen d'analyse 6, lorsqu'il a détecté une intensité trop élevée ou une élévation brusque d'intensité, interrompt la rotation de l'organe moteur 15 et agit sur le circuit hydraulique de commande de l'organe 14 en sorte que le dit organe écarte les parois 12 l'une de l'autre, ce qui assure le dégagement de la peau Le moyen de détection 3 agit également sur le circuit de l'organe 14 pour provoquer le rapprochement des parois.

La machine selon cet exemple de réalisation ne requiert aucun organe 40 d'inversion 6 du sens de rotation de l'organe moteur 15 ni aucun organe de temporisation 38 et 39.

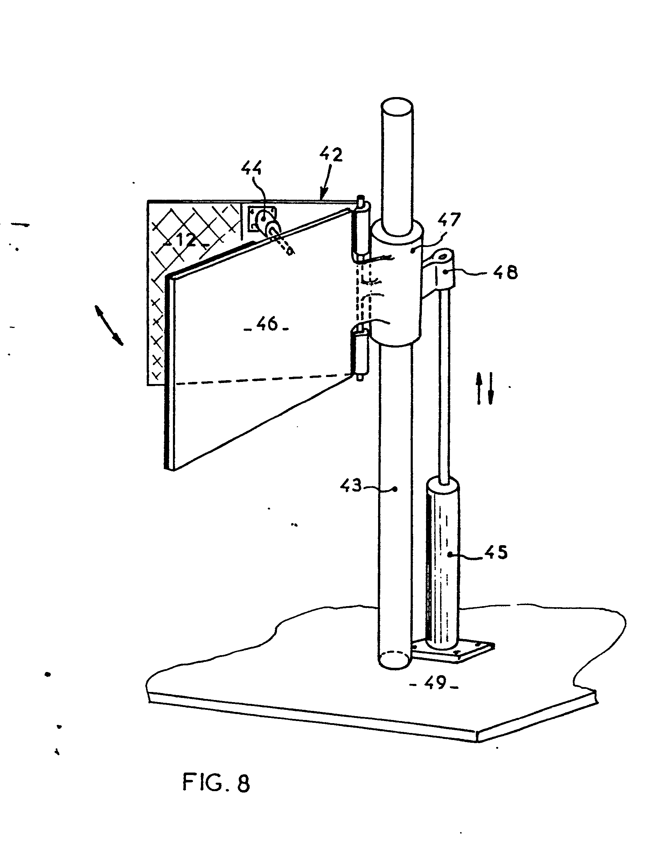

Selon une autre variante de réalisation représentée en fig 8, les moyens de traction sont constitués par une pince 42 dotée de deux parois rugueuses 12, par au moins un guide vertical 43 le long duquel coulisse la pince, par un organe moteur 44 de fermeture ou d'ouverture de la pince et par un organe moteur 45 d'actionnement de la pince suivant un mouvement de monte et baisse.

Selon cet exemple de réalisation, la pince comprend deux parois supports 46 verticales articulées l'une à l'autre sur chacune desquelles est fixée une des parois rugueuses 12, les deux parois rugueuses, étant bien entendu en vis à vis l'une de l'autre.

Chaque paroi articulée coopère avec l'organe moteur 44. Cet organe est par exemple constitué par un vérin hydraulique en prise par sa tige avec une paroi support 46 et par son corps avec l'autre paroi 46 de la pince.

0104117

REVENDICATIONS

R1/ Machine pour le dépouillage des animaux de préférence à fourrure comme par exemple les lapins, destinée à ˆetre intégrée
dans une chaˆine d'abattage du type de celle comportant un
convoyeur aérien (1) amenant les animaux abattus à différents
postes de tarvail caractérisée en ce qu'elle comporte des
moyens de traction (2) de la peau de l'animal, au moins un
moyen de détection (3) de la posi tion de la peau par rapport
aux moyens de traction, au moins un organe de commande (4) de
la mise en fonctionnement de moyens de traction, valide par
le moyen de détection (3), au moins un moyen de guidage '(5)
de la peau vers les moyens de traction, au moins un moyen
d analyse (6) de l'effort de traction exercé sur la peau lors
du dépouillage et au moins un circuit d électronique (7) de
commande de l'arr et des moyens de traction et du dégagement
de la peau à partir des informations transmises par le moyen
d'analyse en sorte d interrompre l'opération de dépouillage
lorsque l'importance de l effort de traction peut conduire à
la cassure de la peau.

R2/ Machine pour le dépouillage des animaux selon la revendication 1 caractérisée en ce que les moyens de traction (2) monmontés sur un b ati comportant deux flans verticaux (16) sont
constitués par deux parois larges, rugueuses (12) entre lesquelles est introduite la peau, par des organes presseurs
(13) maintenant ces parois contre la peau, au moins pendant
l opération de dépouillage, par au moins un organe moteur
(14) pour rapprocher ou écarter les parois l'une de l'autre
et/ou par au moins un mécanisme pour déplacer simultanément

les deux parois suivant un mouvement de descente pour le dépouillage du cou et de l'arrière de la t ete de l'animal et suivant un mouvemnt de montée pour interrompre la traction et/ou dégager la peau,

R3/ Machine selon les revendications 1 et 2 caractérisée en ce que les parois rugueuses 12 présentent chacune sur leur face active, c'est à dire la face en contact avec la peau des saillies (12A) en forme de pavés, disposées suivant plusieurs rangs décalés les uns par rapport aux autres.

R4/ Machine selon la revendication 2 caractérisée en ce que les parois rugueuses se présentent chacune sous la forme de deux bandes sans fin montées chacune sur deux rouleaux cylindriques horizontaux (17 et 18 rotatifs dans des paliers d extrémité.

R5/ Machine selon la revendication 4 caractérisée en ce que les parois rugueuses se présentent sous la forme de bandes, sont dotées sur leur face intérieure d'au moins une courroie trapézoïdale (32) engagée dans une gorge trapézoïdale (33) ménagée dans chaque rouleau (17) et (18) en sorte d assurer un calage latéral de la dite bande sur les dits rouleaux. 10 R6/ Machine selon la revendication 4 caractérisée en ce que les paliers (19) des rouleaux supérieurs (17) sont montés sur un support angulairement mobile (20) en sorte que les dits rouleaux supérieurs (17) puissent se rapprocher l'un de ou s'écarter lors de l'introduction de la peau entre les parois rugueuses .

19                     0104117

R7/ Machine selon la revendication 4 caractérisée en ce que les paliers (19) des rouleaux inférieurs (18) sont dotés d'organes de coulissement (23) sur les flans du b^ati coopérant avec des organes de mise en tension de la bande par déplacement des dits paliers (19) et donc des dits rouleaux (18).

R8/ Machine selon la revendication 2 caractérisée en ce que les organes presseurs (13) sont montés en vis à vis l'un de l'autre chacun dans l'espace défini par une bande et coopérant chacun avec au moins un organe, réglable, de maintien contre la portion de la bande en prise avec la peau.

R9/ Machine selon les revendications 2 et 8 caractérisée en ce que les organes presseurs sont constitués chacun par un rouleau cylindrique horizontal, rotatif dans des paliers d'extrémité (34), rev etu d'un matériau souple et élastique en sorte de pouvoir se déformer lors de l'introduction entre les bandes ou parois rugueuses sans fin afin d'éviter tout écrasement de la dite peau.

R10/Machine selon la revendication 9 caractérisée en ce que le rev etement de chaque rouleau presseur est constitué par juxtaposition de rondelles (35) enfilées sur l'axe (36) du dit rouleau entre deux flasques (37) d'extrémité.

R11/Machine selon la revendication 2 et les revendications 4 à 10 caractérisée en ce que le mécanisme d actionnement des bandes ou parois sans fin (12) est constitué par un organe moteur (15) associé à une transmission coopérante avec les rouleaux (17) et/ou (18).

0104117

R12/Machine selon la revendication 1 et les revendications 2, 4 à caractérisée en ce que son bâti est constitué de deux supports (41) articulés l'un à l'autre portant chacun une bande ou paroi sans fin, les (17) et (18) et l'organe presseur (13) associés à cette bande et reliés entre eux par l'organe moteur (14).

R13/Machine selon la revendication 12 caractérisée en ce que l'un des supports (41) est articulé à l'autre autour de l'axe de son rouleau inférieur (17),

R14/Machine selon la revendication 1 caractérisée en ce que les moyens de traction de la peau sont constitués par une pince (42) dotée de deux parois rugueuses (12), par au moins un guide vertical (43) le long duquel coulisse la pince, par au moins un organe moteur (44) d'ouverture ou de fermeture de la pince et par au moins un organe moteur (45) d'actionnement de la pince suivant un mouvement de montée et baisse.

R15/Machine selon la revendication 1 caractérisée en ce que le moyen d'analyse (6) est doté d'un capteur de signal 6A, de moyens de mise en forme du dit sigal par filtrage, amplification et intégration et d'un comparateur 6B établissant à chaque instant la comparaison du signal reçu transformé avec des valeurs de consigne afin de donner une information au circuit d'électronique 7 lorsque le signal reçu est égal aux valeurs de consigne.

FIG.1

0104117

IV

12

- 17 -

22

32

13

36

- 18 -

22

FIG.2

IV

COUPE IV_IV

FIG. 4

0104117

FIG . 4A

FIG.3

FIG.5

SECTION A.A

FIG.6

FIG. 7

FIG. 8

0104117

Fig.9